# EUROPEAN PATENT APPLICATION

(11) **EP 3 343 052 A1**
(43) Date of publication of application: **04.07.2018**
(21) Application number: 15902340.7
(22) Date of filing: 01.10.2015
(51) Int. Cl.: F16C 32/04, F16C 13/02, G01H 17/00, C23C 2/06

(54) **MAGNETIC BEARING DEVICE AND HOT-DIP GALVANIZING APPARATUS COMPRISING SAME**

(30) Priority: 25.08.2015 KR 20150119744
(71) Applicant: Posco, Pohang-si, Gyeongsangbuk-do 37859 (KR)
(72) Inventor: KWEON, Yong-Hun, Gwangyang-si Jeollanam-do 57807 (KR); JANG, Tae-In, Gwangyang-si Jeollanam-do 57807 (KR); JEUNG, Yeon-Chae, Gwangyang-si Jeollanam-do 57807 (KR)
(74) Representative: Zech, Stefan Markus
(86) International application number: PCT/KR2015/010362
(87) International publication number: WO 2017/034068

(57) **Abstract**

A magnetic bearing device according to one embodiment of the present invention may comprise: a support unit which is disposed to be adjacent to a roll shaft and forms a magnetic field toward the roll shaft; and a magnetic force receiving unit which is coupled to the roll shaft and only a part of which faces the support unit is made of a magnetic body, wherein the magnetic force receiving unit magnetizes by mean of a magnetic force.

## Description

### [Technical Field]

The present inventive concept relates to a magnetic bearing device and a hot-dip galvanizing apparatus including the magnetic bearing device.

### [Background Art]

In a hot-dip galvanizing process, a steel sheet may be immersed in a galvanizing bath, filled with molten zinc via a snout, and may proceed in a vertical direction in a state of contact with a pot roll in the galvanizing bath, thereby being supported by the pot roll.

The pot roll may be a sink roll or a stabilizing roll. Such a sink roll may function to change a moving direction of the steel sheet, and such a stabilizing roll may function to correct a shape of the steel sheet.

In addition, mechanical contact is inevitable in a roll shaft bearing of a pot roll known in the art, which is rotated, for example, by rotating an axis of the bearing or by using ball bearings.

When such a bearing is used in the galvanizing process, the bearing may be gradually abraded while the pot roll rotates in the hot-dip galvanizing bath, and vibrations and noise may occur due to unstable rotation.

In addition, such contact-type bearings not only drastically shorten the lifespan thereof, but may also cause surface defects on a plated steel sheet, such as non-uniformity in plating thickness deviations, due to vibrations of the pot roll.

Recently, non-contact type bearing devices such as magnetic bearing devices have been developed, in order to prevent problems of the contact type bearing devices as described above.

Meanwhile, it is necessary to prevent a magnetic bearing device from colliding with a roll axis by maintaining a constant distance between the magnetic bearing device and the roll axis, for example.

However, when magnetic force, generated to maintain a constant distance between the magnetic bearing device and the roll axis, is not precisely controlled, it may be difficult to prevent the magnetic bearing device from colliding with the roll axis.

That is, when the magnetic bearing device is not precisely controlled, the lifespan of the magnetic bearing device may be shortened due to collisions with the roll axis.

Further, the pot roll may be vibrated when collisions between the magnetic bearing device and the roll axis occur, since the magnetic bearing device may not be precisely controlled.

In addition, surface defects, such as non-uniformity in plating thickness deviations, may occur in a plated steel sheet due to vibrations of the pot roll, similarly to those occurring in contact type bearing devices as described above.

Accordingly, it is necessary to study a magnetic bearing device enabling such problems to be solved, and a hot-dip galvanizing apparatus including the magnetic bearing device.

### [Disclosure]

### [Technical Problem]

An aspect of the present inventive concept may provide a magnetic bearing device in which a support of a roll shaft is precisely controlled in a non-contact manner, and a hot-dip galvanizing apparatus including the magnetic bearing device.

### [Technical Solution]

According to an aspect of the present inventive concept, a magnetic bearing device may include a support unit disposed adjacent to a roll shaft and generating a magnetic field toward the roll shaft, and a magnetic force receiving unit coupled to the roll shaft and only including a magnetic material in a portion facing the support unit, wherein the magnetic material is magnetized by the magnetic force.

In addition, the magnetic force receiving unit of the magnetic bearing device may include a magnetic member formed of the magnetic material and disposed on the portion facing the support unit in the roll shaft, and a nonmagnetic member formed of a nonmagnetic material and disposed on a portion other than the portion on which the magnetic member is disposed on the roll shaft.

In addition, the magnetic force receiving unit of the magnetic bearing device may further include an axial sheath member fitted onto the roll shaft and with which the magnetic member and the nonmagnetic member are combined.

In addition, the magnetic member of the magnetic bearing device may have a cylindrical shape, and have the same width as the portion facing the support unit in the roll shaft.

In addition, the magnetic member of the magnetic bearing device may have a disc shape, and the number of the magnetic member may correspond to a width of the portion facing the support unit in the roll shaft.

In addition, the roll shaft of the magnetic bearing device may be formed of a nonmagnetic material.

In addition, the support unit of the magnetic bearing device may include a magnetic support disposed adjacent to the roll shaft and supporting the roll shaft in at least one of an axial direction or a radial direction of the roll shaft, and a sensor electrically connected to the magnetic support to measure and control an intensity of vibrations of the magnetic support.

In addition, the magnetic support of the magnetic bearing device may further include a radial magnetic member disposed in a radial direction of the roll shaft and supporting the roll shaft in the radial direction of the roll shaft when the roll shaft rotates, and an axial magnetic member disposed to face a stepped portion, formed in the roll shaft or the axial sheath member of the magnetic force receiving unit fitted on the roll shaft, in an axial direction of the roll shaft and supporting the roll shaft in the axial direction of the roll shaft when the roll shaft rotates.

In addition, the support unit of the magnetic bearing device may further include a housing part with which the magnetic support and the sensor are combined, and a radial touch disc having a disc shape and combined with the housing part or an inner side of the radial magnetic member, wherein an internal diameter of the radial touch disc is smaller than an internal diameter of the radial magnetic member.

In addition, the support unit of the magnetic bearing device may further include an axial touch disc combined with the housing part to be disposed between the axial magnetic member and the stepped portion of the roll shaft.

In addition, the magnetic force receiving unit of the magnetic bearing device may include the magnetic material only on a portion facing the magnetic support and the sensor in the roll shaft.

According to another aspect of the present inventive concept, a hot-dip galvanizing apparatus may include a galvanizing bath configured to accommodate molten zinc, a pot roll disposed on a transportation path of a steel sheet moving into the galvanizing bath, and the magnetic bearing device described above and disposed on a roll shaft of the pot roll.

### [Advantageous Effects]

As set forth above, a magnetic bearing device and a hot-dip galvanizing apparatus including the magnetic bearing device according to an exemplary embodiment in the present disclosure can support a roll shaft in a non-contact manner.

In particular, when the roll shaft is supported by magnetic force, the magnetic force can be controlled to only affect a portion to be supported in the roll shaft. Accordingly, the support of the roll shaft by the magnetic force can be precisely controlled in the magnetic bearing device and the hot-dip galvanizing apparatus including the magnetic bearing device according to the exemplary embodiment in the present disclosure.

Since collisions between the roll shaft 2 and the magnetic bearing device 1 are prevented, problems such as non-uniformity in plating thickness deviations caused by vibrations of the pot roll may be solved and quality of the steel sheet may be improved.

### [Description of Drawings]

FIG. 1 is a perspective view illustrating a hot-dip galvanizing apparatus according to an exemplary embodiment in the present disclosure;
FIG. 2 is a cross-sectional view illustrating a magnetic bearing device according to an exemplary embodiment in the present disclosure;
FIG. 3 is a side view illustrating a magnetic force receiving unit in a magnetic bearing device according to an exemplary embodiment in the present disclosure;
FIG. 4 is an exploded perspective view of a magnetic force receiving unit in a magnetic bearing device according to an exemplary embodiment in the present disclosure;
FIG. 5 is an exploded perspective view illustrating a magnetic force receiving unit in a magnetic bearing device according to an exemplary embodiment in the present disclosure;
FIG. 6 is a cross-sectional view illustrating a radial touch disc in a magnetic bearing device according to another exemplary embodiment in the present disclosure;
FIG. 7 is a front view and a perspective view illustrating a radial magnetic member of a magnetic support part in a magnetic bearing device according to an exemplary embodiment in the present disclosure;
FIG. 8 is a perspective view illustrating an axial magnetic member of a magnetic support part in a magnetic bearing device according to an exemplary embodiment in the present disclosure; and
FIG. 9 is a perspective view illustrating a sensor unit in a magnetic bearing device according to an exemplary embodiment in the present disclosure.

### [Modes for Carrying out the Invention]

Hereinafter, exemplary embodiments of the present inventive concept will be described with reference to the accompanying drawings. The present inventive concept may, however, be exemplified in many different forms and should not be construed as being limited to the specific embodiments set forth herein. Those skilled in the art could easily suggest various embodiments, modifications, and equivalents falling within the scope of the present invention by adding, modifying, and deleting components.

The same reference numbers will be used throughout this specification to refer to the same or like components.

A magnetic bearing device 1 and a hot-dip galvanizing apparatus including the magnetic bearing device 1 according to an exemplary embodiment in the present disclosure may support a roll shaft 2, and more specifically, may support the roll shaft 2 in a non-contact manner.

In particular, the magnetic bearing device 1 and the hot-dip galvanizing apparatus including the magnetic bearing device 1 according to the exemplary embodiment in the present disclosure may support the roll shaft 2 with magnetic force. According to the exemplary embodiment in the present disclosure, the magnetic force may affect only a portion to be supported in the roll shaft 2, and thereby the support of the roll shaft 2 may be precisely controlled by the magnetic force.

Accordingly, since collisions between the roll shaft 2 and the magnetic bearing device 1 are prevented, problems such as non-uniformity in plating thickness deviations caused by vibrations of the pot roll may be solved and quality of the steel sheet may be improved.

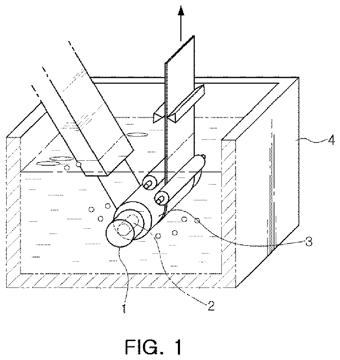

FIG. 1 is a perspective view illustrating a hot-dip galvanizing apparatus according to an exemplary embodiment in the present disclosure. Referring to FIG. 1, the hot-dip galvanizing apparatus according to the exemplary embodiment in the present disclosure may include a galvanizing bath 4 in which molten zinc is accommodated, a pot roll 3 disposed on a transportation path of the steel sheet moving into the galvanizing bath 4, and a magnetic bearing device 1, to be described later, disposed on the roll shaft 2 of the pot roll 3.

In this manner, the galvanizing bath 4 and the pot roll 3 may be provided to galvanize the steel sheet.

Here, the pot roll 3 may include a sink roll configured to change a moving direction of the steel sheet, and a stabilizing roll configured to correct a shape of the steel sheet.

In particular, since the hot-dip galvanizing apparatus according to the exemplary embodiment in the present disclosure includes the magnetic bearing device 1, the roll shaft 2 of the pot roll 3 may be precisely supported.

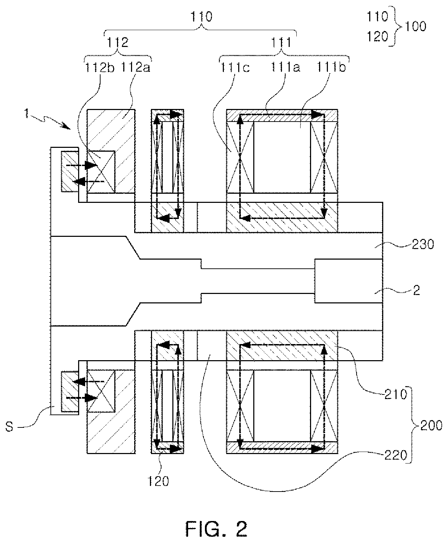

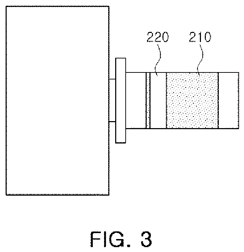

FIG. 2 is a cross-sectional view illustrating a magnetic bearing device 1 according to an exemplary embodiment in the present disclosure, and FIG. 3 is a side view illustrating a magnetic force receiving unit 200 of the magnetic bearing device 1 according to an exemplary embodiment in the present disclosure.

Referring to FIGS. 2 and 3, the magnetic bearing device 1 according to the exemplary embodiment in the present disclosure may include a support unit 100 disposed adjacent to the roll shaft 2 and generating a magnetic field toward the roll shaft 2, and a magnetic force receiving unit 200 coupled to the roll shaft 2. The magnetic force receiving unit 200 may include a magnetic material in only a portion facing the support unit 100, thereby being magnetized with magnetic force of the magnetic field generated in the support unit 100.

That is, since an effect of the magnetic force of the magnetic field generated in the support unit 100 is concentrated on the portion of the magnetic force receiving unit 200 disposed on the roll shaft 2, the support of the roll shaft 2 may be precisely controlled.

The support unit 100 may function to support the roll shaft 2 in a non-contact manner using the magnetic force. That is, the support unit 100 may generate the magnetic field, and support the roll shaft 2 by interaction with the roll shaft 2.

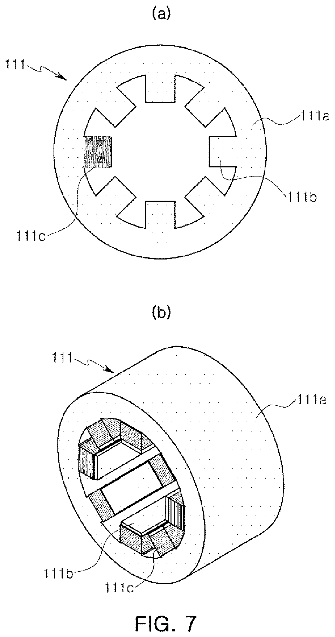

In this regard, the support unit 100 may include a magnetic support 110 supporting the roll shaft 2 in at least one of an axial direction or a radial direction by the magnetic force, and a sensor unit 120 for sensing vibrations. This will be described later in detail with reference to FIGS. 7 to 9.

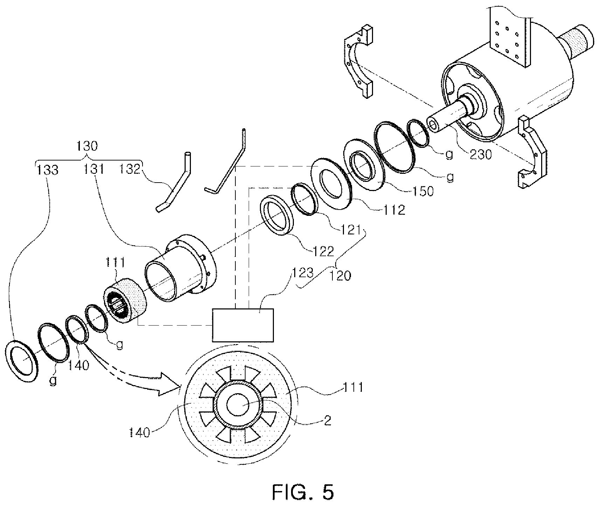

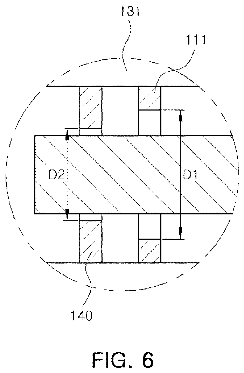

In addition, the support unit 100 may include a housing 130 with which the magnetic support 110 and the sensor unit 120 are combined, and a radial touch disc 140 and an axial touch disc 150 which serve to prevent collisions of the magnetic support 110 with the roll shaft 2. This will be described later in detail with reference to FIGS. 5 and 6.

Here, when the roll shaft 2 is formed of a magnetic material, the roll shaft 2 may be directly affected by the magnetic field generated in the support unit 100 to be polarized and supported by an attractive force or a repulsive force.

In particular, even when the roll shaft 2 is not formed of a magnetic material, the roll shaft 2 may be supported by the interaction between the support unit 100 and the magnetic force receiving unit 200 since the magnetic force receiving unit 200 to be described later, is coupled to the roll shaft 2.

That is, the roll shaft 2 of the magnetic bearing device 1 according to the exemplary embodiment in the present disclosure may be formed of a nonmagnetic material.

In this manner, since the roll shaft 2 is not affected by the magnetic field generated in the support unit 100 when the roll shaft 2 is formed of the nonmagnetic material, only the portion formed of the magnetic material in the magnetic force receiving unit 200, to be described later, may be affected by the magnetic field generated in the support unit 100. Accordingly, the support unit 100 may support the roll shaft 2 in more precisely controlled manner.

That is, when the roll shaft 2 is formed of the magnetic material, an induced current formed by the magnetic force transmitted from a portion facing the support unit 100 in the roll shaft 2 or the magnetic field generated in the support unit 100 may affect the other portion of the roll shaft 2, resulting in a control error occurrence.

In addition, when the roll shaft 2 is formed of a nonmagnetic material, a heat generation problem caused by the induced current formed by the magnetic force may be solved.

The magnetic force receiving unit 200 may function to precisely control the support unit 100 to support the roll shaft 2, by concentrating the magnetic field generated in the support unit 10.

In this regard, the magnetic force receiving unit 200 may include the magnetic material at only a portion facing the support unit 100 in the roll shaft 2. In such a manner, the magnetic force may be concentrated on the portion formed of the magnetic material in the magnetic force receiving unit 200 due to the interaction with the magnetic field generated in the support unit 100.

In particular, the portion formed of the magnetic material in the magnetic force receiving unit 200 may be preferably disposed on a portion, facing the magnetic support 110 and sensor unit 120 of the support unit 100, in the roll shaft 2. The magnetic support 110 and sensor unit 120 of the support unit 100 will be described later.

That is, the magnetic force receiving unit 200 of the magnetic bearing device 1 according to the exemplary embodiment in the present disclosure may include a magnetic member 210 formed of the magnetic material, disposed only in the portion facing the magnetic support 110 and sensor unit 120, on the roll shaft 2.

This is because the support unit 100 generates the magnetic force in a portion in which the magnetic support 110 and the sensor unit 120 face the roll shaft 2.

More specifically, the magnetic force receiving unit 200 may include the magnetic member 210 and a nonmagnetic member 220.

That is, the magnetic force receiving unit 200 of the magnetic bearing device 1 according to the exemplary embodiment in the present disclosure may further include the magnetic member 210 formed of a magnetic material and disposed on the portion facing the support unit 100 in the roll shaft 2, and the nonmagnetic member 220 formed of a nonmagnetic material and disposed on a portion other than the portion on which the magnetic member is disposed, in the roll shaft.

Here, the magnetic material may include, for example, iron, cobalt, nickel, or a ferritic/martensitic stainless steel. In addition, the nonmagnetic material may include, for example, a non-metallic material such as a ceramic, or a metal, such as an austenite-based stainless steel.

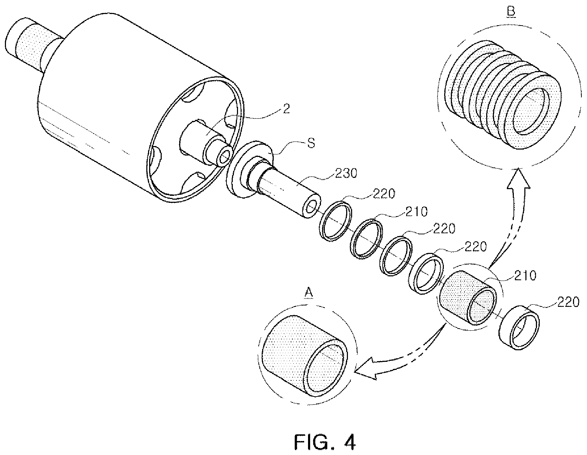

In addition, the magnetic member 210 and the nonmagnetic member 220 may have a cylindrical shape or a disc shape so as to be coupled to the roll shaft 2. This will be described later in detail with reference to FIG. 4.

Further, the magnetic force receiving unit 200 may further include an axial sheathing member 230 by which the magnetic member 210 and the nonmagnetic member 220 may be easily coupled to the roll shaft 2.

That is, the magnetic force receiving unit 200 of the magnetic bearing device 1 according to the exemplary embodiment in the present disclosure may further include the axial sheathing member 230 fitted to the roll shaft 2 and with which the magnetic member 210 and the nonmagnetic member 220 are combined.

The axial sheathing member 230 may be provided since it may be difficult to couple the magnetic member 210 or the nonmagnetic member 220 to the roll shaft 2 when the roll shaft 2 does not have a rod shape having a constant diameter but a shape having diameters varying along its length.

That is, since only the inner side of the axial sheathing member 230 is formed to have a shape corresponding to the roll shaft 2, it is not necessary to form the magnetic member 210 and nonmagnetic member 220 having different sizes.

Here, when the roll shaft 2 is formed of a nonmagnetic material, the axial sheathing member 230 may also be formed of a nonmagnetic material. Accordingly, the magnetic force may be effectively concentrated by the magnetic force receiving unit 200.

FIG. 4 is an exploded perspective view illustrating a magnetic force receiving unit 200 of a magnetic bearing device 1 according to an exemplary embodiment in the present disclosure . Referring to FIG. 4, the magnetic member 210 of the magnetic bearing device 1 according to the exemplary embodiment in the present disclosure may have a cylindrical shape. A width of the magnetic member 210 may be the same as a width of the portion facing the support unit 100 in the roll shaft 2.

In addition, the magnetic member 210 of the magnetic bearing device 1 according to the exemplary embodiment in the present disclosure may have a disc shape, and the number of the magnetic member 210 may correspond to the width of the portion facing the support unit 100 in the roll shaft 2.

That is, the magnetic member 210 and the nonmagnetic member 220 may have the cylindrical shape or the disc shape to be coupled to the roll shaft 2.

Here, when the magnetic member 210 and the nonmagnetic member 220 have the cylindrical shape, the magnetic member 210 and the nonmagnetic member 220 may be easily coupled to the roll shaft 2. That is, the coupling may only be completed by inserting the cylindrical magnetic member 210 having the same width as the portion facing the support unit 100 into the roll shaft 2, and the cylindrical nonmagnetic member 220 having the same width as a portion that does not face the support unit 100 in the roll shaft 2.

Meanwhile, when the magnetic member 210 and nonmagnetic member 220 have a disc shape, it is advantageous that the magnetic member 210 and the nonmagnetic member 220 do not need to be manufactured every time that the magnetic member 210 and nonmagnetic member 220 are provided to the support unit 100 or roll shaft 2 having various shapes. That is, the magnetic member 210 may be stacked by a width equal to the width of the portion facing the support unit 100 in the roll shaft 2, to be coupled to the roll shaft 2, and the nonmagnetic member 220 may be stacked by a width equal to the width of the portion that does not face the support unit 100 in the roll shaft 2, to be coupled to the roll shaft 2.

FIG. 5 is an exploded perspective view illustrating a magnetic force receiving unit 200 in a magnetic bearing device 1 according to an exemplary embodiment in the present disclosure, and FIG. 6 is a cross-sectional view illustrating a radial touch disc 140 in a magnetic bearing device 1 according to another exemplary embodiment in the present disclosure.

Referring to FIGS. 5 and 6, the support unit 100 of the magnetic bearing device 1 according to the exemplary embodiment in the present disclosure may further include a housing 130 with which the magnetic support 110 and the sensor unit 120 are combined, and a radial touch disc 140 coupled to the housing 130 or an inner side of a radial magnetic member 111of the magnetic support 110. An interior diameter D2 of the radial touch disc 140 may be smaller than an interior diameter D1 of the radial magnetic member 111.

In addition, the support unit 100 of the magnetic bearing device 1 according to the exemplary embodiment in the present disclosure may further include an axial touch disc 150 disposed between an axial magnetic member 112 of the magnetic support 110 and a stepped portion s of the roll shaft 2 and combined with the housing 130.

That is, the support unit 100 may include the radial touch disc 140 and the axial touch disc 150 to prevent the magnetic support 110 from colliding with the roll shaft 2.

The magnetic support 110 and the sensor unit 120 may be combined to the housing 130. In this regard, the housing 130 may include a housing body 131 as a base member.

That is, the housing body 131 may be combined with the magnetic support 110, the sensor unit 120, or the like. In this regard, the housing body 131 may have a cylindrical shape so that the magnetic support 110, the sensor unit 120, or the like are combined therewith. The housing body 131 may include a stepped portion corresponding to a difference in diameters of the magnetic support 110, the sensor unit 120, and the like.

Further, the housing 130 may include a cable tube configured to electrically connect the magnetic support 110, the sensor unit 120, and the like to an external controller. That is, the cable tube may function to protect a control cable or communication cable connected to coils of the magnetic support 110 and the sensor unit 120 from a high temperature environment and the like.

In addition, the housing 130 may further include a housing cover 133 to prevent the magnetic support 110 and the sensor unit 120 from moving out from the housing body 131 after the magnetic support 110 and the sensor unit 120 are combined with an inner side of the housing body 131. The housing cover 133 may be combined with an end of the housing body 131 having the cylindrical shape.

In addition, a gasket g may be combined with the housing 130 to block inflow of an external material such as a hot-dip galvanizing material while combining the magnetic support 110 and the sensor unit 120 with the housing body 131.

The radial touch disc 140 may function to prevent the radial magnetic member 111 of the magnetic support 110, which will described later, from colliding with the roll shaft 2.

That is, the radial touch disc 140 may come into contact with the roll shaft 2 before the radial magnetic member 111 comes into contact with the roll shaft 2, when no current is applied to the radial magnetic member 111 and thereby the magnetic field is not generated. Accordingly, the radial touch disc 140 may prevent the radial magnetic member 111 from colliding with the roll shaft 2.

In this regard, the interior diameter D2 of the radial touch disc 140 may be smaller than the interior diameter D1 of the radial magnetic member 111.

In addition, the radial touch disc 140 may be combined with an inner side of the radial magnetic member 111, as illustrated in FIG. 5.

According to another exemplary embodiment in the present disclosure, an outer side of the radial touch disc 140 may be combined with the housing 130, as illustrated in FIG. 6. The radial touch disc 140 may be disposed adjacently to the radial magnetic member 111.

The axial touch disc 150 may function to prevent the axial magnetic member 112 of the magnetic support 110, to be described later, from colliding with the roll shaft 2.

That is, when no current is applied to the axial magnetic member 112 and thereby, the magnetic field is not formed, the axial touch disc 150 may come into contact with the roll shaft 2 before the axial magnetic member 112 comes into contact with the roll shaft 2. Accordingly, collision between the axial magnetic member 112 and the roll shaft 2 may be prevented.

In this regard, the axial touch disc 150 may be combined with the housing 130 and disposed between the axial magnetic member 112 and the stepped portion s of the roll shaft 2.

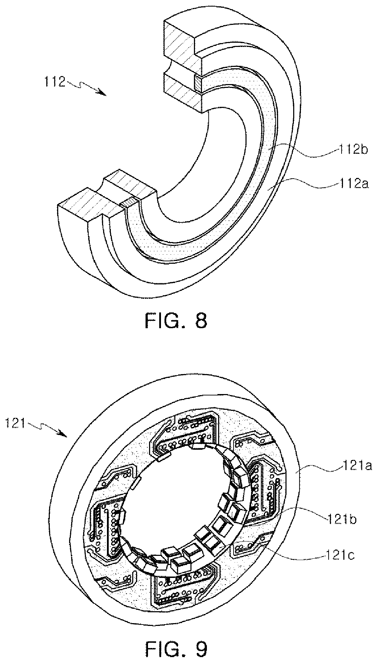

FIG. 7 is a front view and a perspective view illustrating a radial magnetic member 111 of a magnetic support 110 in a magnetic bearing device 1 according to an exemplary embodiment in the present disclosure, FIG. 8 is a perspective view illustrating an axial magnetic member 112 of a magnetic support 110 in a magnetic bearing device 1 according to an exemplary embodiment in the present disclosure, and FIG. 9 is a perspective view illustrating a sensor unit 120 in a magnetic bearing device 1 according to an exemplary embodiment in the present disclosure.

Referring to FIGS. 7 to 9, the support unit 100 of the magnetic bearing device 1 according to the exemplary embodiment in the present disclosure may include the magnetic support 110 disposed adjacent to the roll shaft 2 and supporting the roll shaft 2 in at least one of an axial direction and a radial direction of the roll shaft 2, and the sensor unit 120 electrically connected to the magnetic support 110 and measuring and controlling the intensity of the vibration generated in the magnetic support 110.

That is, the support unit 100 may include the magnetic support 110 and the sensor unit 120 to support the roll shaft 2 by the magnetic force in a non-contact manner.

The magnetic support 110 may form the magnetic field to support the roll shaft 2.

Here, when the roll shaft 2 is formed of a magnetic material, the roll shaft 2 may be directly affected by the magnetic field generated in the magnetic support 110 and thereby polarized. Accordingly, the roll shaft 2 may be supported by an attractive force or a repulsive force.

In particular, even when the roll shaft 2 is not formed of a magnetic material, the roll shaft 2 may be supported by an interaction between the magnetic support 110 and the magnetic force receiving unit 200 since the magnetic force receiving unit 200 is combined with the roll shaft 2.

In this regard, the magnetic support 110 may include the radial magnetic member 111 supporting the roll shaft 2 in a radial direction of the roll shaft 2, and the axial magnetic member 112 supporting the roll shaft 2 in an axial direction of the roll shaft 2.

That is, the magnetic support 110 in the magnetic bearing device 1 according to the exemplary embodiment in the present disclosure may include the radial magnetic member 111 formed in a radial direction of the roll shaft 2 and supporting the roll shaft 2 in the radial direction of the roll shaft 2 when the roll shaft 2 rotates, and the axial magnetic member 112 disposed to face the roll shaft 2 or the stepped portion s formed on the axial sheathing member 230 of the magnetic force receiving unit 200 fitted on the roll shaft 2 in the axial direction and supporting the roll shaft 2 in the axial direction of the roll shaft 2 when the roll shaft 2 rotates.

The radial magnetic member 111 may include a radial magnetic member body 111a, a radial core 111b, and a radial coil 111c to support the roll shaft 2 in the radial direction of the roll shaft 2.

The radial magnetic member body 111a may be configured to surround the roll shaft 2 in a circumferential direction of the roll shaft 2, and combined with the housing 130. In addition, the radial core 111b may be formed at an inner side of the radial magnetic member body 111a.

The radial core 111b may be formed at regular intervals on the inner side of the radial magnetic member body 111a, and the intervals may be adjusted, as needed. In addition, the radial coil 111c may be wound on the radial core 111b. Here, the magnetic polarity of the radial core 111b may be alternately arranged in an N-S-N-S.

The radial coil 111c may serve to generate the magnetic field by applying current. The radial coil 111c may be formed of ceramic-coated wires for high temperature so as to maintain performance of the magnetic force in a hot-dip galvanizing bath 4 at the high temperature of about 460 °C.

In addition, the radial coil 111c may be connected to the outside through the cable tube or the like, so as to be protected from an external environment such as heat damage.

Here, the magnetic force of the radial magnetic member 111 may be proportional to the number of the radial core 111b, the number of windings of the radial coil 111c, and the applied current.

The axial magnetic member 112 may include an axial magnetic member body 112a, an axial core and an axial coil 112b to support the roll shaft 2 in the axial direction of the roll shaft 2.

The axial magnetic member body 112a may be formed to face the roll shaft 2 or the stepped portion s of the axial sheathing member 230. However, the axial touch disc 150 and the like may be disposed between the axial magnetic member body 112a and the stepped portion s.

In addition, the axial magnetic member body 112a may be combined with the housing 130, and wound with the axial coil 112b.

The axial coil 112b may wind along grooves formed on the axial magnetic member body 112a in a circumferential direction.

The axial coil 112b may function to form the magnetic field by applying current. The axial coil 112b may be formed of ceramic-coated wires for high temperature so as to maintain performance of the magnetic force in the hot-dip galvanizing bath 4 at the high temperature of about 460 °C.

Here, the magnetic force of the axial magnetic member 112 may be proportional to the number of windings of the axial coil 112b and the applied current.

The sensor unit 120 may function to adjust the amount of current applied to the magnetic support 110 by sensing vibrations generated in the radial direction or the axial direction of the roll shaft 2. In this regard, the sensor unit 120 may include a sensor 121, a sensor cover 122, and a controller 123.

The sensor 121 may function to sense the vibrations generated in the radial direction or the axial direction of the roll shaft 2. In this regard, the sensor 121 may include a sensor body 121a configured to surround the roll shaft 2 in the circumferential direction, a sensor core 121b formed on an inner side of the sensor body 121a, and a sensor coil 121c winding the sensor core 121b.

The sensor cover 122 may function to protect the sensor 121 from an external environment such as a high temperature. In this regard, the sensor cover 122 may surround the sensor 121.

The controller 123 may function to adjust the amount of the current applied to the magnetic support 110 by collecting vibration data from the sensor 121. The controller 123 may be integrated with the sensor body 121a, or externally formed and electrically connected to the sensor 121. In addition, the controller 123 may be electrically connected to the magnetic support 110 so as to control the magnetic support 110.

## Claims

1. A magnetic bearing device, comprising:
a support unit disposed adjacent to a roll shaft and generating a magnetic field toward the roll shaft; and
a magnetic force receiving unit coupled to the roll shaft and only including a magnetic material in a portion facing the support unit, wherein the magnetic material is magnetized by the magnetic force.

2. The magnetic bearing device of claim 1, wherein the magnetic force receiving unit comprises:
a magnetic member formed of the magnetic material and disposed on the portion facing the support unit in the roll shaft; and
a nonmagnetic member formed of a nonmagnetic material and disposed on a portion other than the portion on which the magnetic member is disposed, in the roll shaft.

3. The magnetic bearing device of claim 2, wherein the magnetic force receiving unit further comprises an axial sheath member fitted onto the roll shaft and with which the magnetic member and the nonmagnetic member are combined.

4. The magnetic bearing device of claim 2, wherein the magnetic member has a cylindrical shape, and has the same width as the portion facing the support unit in the roll shaft.

5. The magnetic bearing device of claim 2, wherein the magnetic member has a disc shape, and the number of the magnetic member corresponds to a width of the portion facing the support unit in the roll shaft.

6. The magnetic bearing device of claim 1, wherein the roll shaft is formed of a nonmagnetic material.

7. The magnetic bearing device of claim 1, wherein the support unit comprises:
a magnetic support disposed adjacent to the roll shaft and supporting the roll shaft in at least one of an axial direction or a radial direction of the roll shaft; and
a sensor electrically connected to the magnetic support to measure and control an intensity of vibrations of the magnetic support.

8. The magnetic bearing device of claim 7, wherein the magnetic support comprises:
a radial magnetic member disposed in a radial direction of the roll shaft and supporting the roll shaft in the radial direction of the roll shaft when the roll shaft rotates; and
an axial magnetic member disposed to face a stepped portion, formed in the roll shaft or in an axial sheath member of the magnetic force receiving unit fitted on the roll shaft, in an axial direction of the roll shaft and supporting the roll shaft in the axial direction of the roll shaft when the roll shaft rotates.

9. The magnetic bearing device of claim 8, wherein the support unit further comprises:
a housing part with which the magnetic support and the sensor are combined; and
a radial touch disc having a disc shape and combined with the housing part or an inner side of the radial magnetic member, wherein an internal diameter of the radial touch disc is smaller than an internal diameter of the radial magnetic member.

10. The magnetic bearing device of claim 9, wherein the support unit further comprises:
an axial touch disc combined with the housing part to be disposed between the axial magnetic member and the stepped portion of the roll shaft.

11. The magnetic bearing device of claim 7, wherein the magnetic force receiving unit includes the magnetic material only on a portion facing the magnetic support and the sensor in the roll shaft.

12. A hot-dip galvanizing apparatus, comprising:
a galvanizing bath configured to accommodate molten zinc;
a pot roll disposed on a transportation path of a steel sheet moving into the galvanizing bath; and
a magnetic bearing device as claimed in any one of claims 1 to 11, wherein the magnetic bearing device is disposed on a roll shaft of the pot roll.
